(19) Europäisches Patentamt / European Patent Office / Office européen des brevets

(11) **EP 1 853 107 B1**

(12) **EUROPEAN PATENT SPECIFICATION**

(45) Date of publication and mention
of the grant of the patent:
**24.12.2014 Bulletin 2014/52**

(21) Application number: **06708990.4**

(22) Date of filing: **01.03.2006**

(51) Int Cl.:
**A01G 23/083** *(2006.01)*   **G01B 21/12** *(2006.01)*

(86) International application number:
**PCT/FI2006/050086**

(87) International publication number:
**WO 2006/092469 (08.09.2006 Gazette 2006/36)**

(54) **METHOD AND DEVICE FOR CORRECTING MEASUREMENT DATA**

VERFAHREN UND VORRICHTUNG ZUR KORREKTUR VON MESSDATEN

PROCEDE ET DISPOSITIF DE CORRECTION DE DONNEES DE MESURE

(84) Designated Contracting States:
**AT BE BG CH CY CZ DE DK EE ES FI FR GB GR HU IE IS IT LI LT LU LV MC NL PL PT RO SE SI SK TR**

(30) Priority: **02.03.2005 FI 20055101**

(43) Date of publication of application:
**14.11.2007 Bulletin 2007/46**

(73) Proprietor: **Ponsse Oyj**
**74200 Vieremä (FI)**

(72) Inventor: **MOILANEN, Tuomo**
**FI-87700 Kajaani (FI)**

(74) Representative: **Kolster Oy Ab**
**Iso Roobertinkatu 23**
**PO Box 148**
**00121 Helsinki (FI)**

(56) References cited:
**WO-A1-00/15026       WO-A1-2005/043983**
**DE-A1- 4 418 036    FI-B- 97 827**
**FI-B1- 106 092      US-A- 3 720 247**
**US-B2- 6 814 112**

## Description

BACKGROUND OF THE INVENTION

The present invention relates to a method according to the preamble of claim 1. The invention also relates to a device according to claim 8 for applying such a method for use in a lumbering machine, for example.

The invention relates particularly to a lumbering machine, such as a logging machine or a single-grip harvester, wherein the entire diameter and the length of a tree, or both, are automatically measured by means of a harvester head processing the tree. Such devices are disclosed in patent publications FI 87155 or FI 106092, for example.

When trees are felled and processed with modern lumbering machines, it is usual to measure the diagonal/diameter of the tree by monitoring the position of feed rolls or other similar tree-conveying means at the harvester head and by simultaneously assuming that the tree is round. Measurement with feed rolls is inexpensive, since it allows the harvester head to be used for processing both straight and curvy timber, and despite this, relatively reliable measurement data are continuously obtained of its diameter.

When the diameter of a tree is being measured from means for its conveyance, the problem encountered is, however, that the friction elements, mostly more or less spiky, included in these means, intrude into the tree as much as several millimetres. However, this intrusion does not always remain constant, instead, for instance the outside temperature during the work significantly affects the intrusion of the friction elements and, this way, the measurement result obtained. For this reason, particularly springtime, when the temperature in the morning can be well below zero degrees Celsius and in the afternoon sun up to ten degrees above zero, causes problems in the measurement. Since the temperature change affects the intrusion of the friction elements in the tree-conveying means, the correction coefficient given to the measurement result has to be changed often in order for the measurement to remain accurate. In addition, it is known that different wood species behave differently in this connection. Variation may occur even among the same wood species in different logging areas. In practice, this means that laborious calibration measurements with callipers have to be made during the work at sufficiently short intervals.

On the other hand, it is known to measure the diameter of a tree from delimbing elements, such as delimbing blades or knives at the harvester head. However, in practice, accurate measurement of curvy trees is difficult with delimbing means, since feeding the tree through the harvester head can be impossible in the case of a curvy tree without said delimbing elements being opened. However, the measurement of the dimensions of a tree should be regular and continuous, this being an object that is quite seldom achieved when measurement takes place with delimbing elements only. The object is achieved mainly in the cases when the tree to be processed at the harvester head is straight.

Solutions are known wherein attempts are made to overcome these problems associated with measurement by measuring the diameter of a tree at the harvester head with both tree-conveying means, such as feed rolls, and delimbing elements, such as delimbing knives, simultaneously or preferably in a complimentary manner. Such an arrangement is disclosed in Finnish patent FI 106092, for example.

In addition to the above problems, it is also usual that resin, bark or a combination thereof that accumulates in the friction elements or the delimbing elements in the tree-conveying means impedes the measurement. In this way, the impurities accumulating on the surface of the tree-conveying means or the delimbing element, used as the measuring means, change their actual distance from the surface of the tree, thus having a harmful effect on the measurement result. In particular, such problems occur in association with measuring means that roll along the surface of the tree, but similar problems may naturally occur also in association with measuring means that glide along the surface of the tree.

These problems can be partly overcome with solutions according to which the idea is to measure the dimensions of a tree by using only non-contacting methods, known per se, such as sensors based on the ultrasound or laser techniques. One such solution employed in timber sawing is disclosed in publication US 4,982,772, for example. However, such a measuring arrangement has not so far been successfully implemented in a harvester main application in such a manner that it would be sufficiently reliable. For example, significant problems have been caused by a too long non-contacting measuring distance or a high variation in this distance during the measurement. A long measuring distance easily causes also more interference in the measurement, since in this case, loose impurities, such as pieces of bark, which interfere with the measurement, may easily move about in the area between the sensor and the tree to be measured. A solution for implementing length measurement by non-contacting methods and particularly intended to be implemented at the harvester head and having the above-mentioned problems is disclosed in Finnish patent FI 88074.

BRIEF DESCRIPTION OF THE INVENTION

The object of the present invention is thus to provide a method and a device for implementing the method in a manner achieving a totally novel solution to the above-mentioned prior art drawbacks.

This object is achieved in accordance with the present invention by the method and device for correcting measurement data and having the characteristics defined in the claims. More exactly expressed, the method is mainly characterized by what is disclosed in the characterizing part of the attached claim 1. The device, in turn, is mainly characterized in what is stated in the characterizing part of the attached claim 8.

Preferred embodiments of the invention are described in the attached dependent claims.

Consequently, the main idea of the invention is to eliminate the usually required correction of the measurement results, at least as far as it is caused by the sinking of the measuring means into the item to be measured or other variation thereof relative to the surface of the tree.

In this context, *measuring means* refers to tree-conveying means, known per se, delimbing elements, various measuring wheels, means for supporting timber at a harvester head, drags or other means arranged at the harvester head particularly for this purpose.

The invention brings about significant advantages. Accordingly, it is typical that the calibration of the measuring means of the harvester head takes up a significant amount of expensive work time, even in the use of a modern harvester head. It is not at all exceptional that the equipment at the harvester head employed for diameter and length measurement has to be calibrated at least once daily or even once during every working cycle. By taking the present procedure into use, the calibration requirement can be substantially avoided.

By using the solution according to the invention, the significant effect of external interfering factors, such as variation in wood species and weather, on the accuracy of the measurement results can also be successfully avoided.

According to a first preferred embodiment of the invention, an exactly equally accurate measurement result is achieved by the measuring method from both small and large trees. Performing a verifying measurement with just one distance sensor enables the estimation of the intrusion of the friction elements into the surface of the tree in one measuring means, such as a tree-conveying means or a length-measuring wheel. Thus, the intrusion data of only one measurement result can be utilized in the diameter measurement of the harvester head by assuming that the intrusion of the other measuring means is equal.

Accordingly, the intrusion measurement according to the invention and implemented in association with a length-measuring wheel can be applied to correcting the results of a measurement of the diameter of a tree. A length-measuring wheel is especially advantageous as an object of a measurement descriptive of the hardness of such a tree at each particular time, since the intention is usually to keep the compression force of the length-measuring wheel against the surface of the tree constant.

According to a second preferred embodiment of the invention, the follow-up of the intrusion of the measuring means is also applicable to improving the length measurement results of a tree or an item cut off from it. When the length measurement of a tree trunk takes place by means of a length-measuring device of a harvester head, known per se, such as a length-measuring wheel running along the surface of the tree, for example a length-measuring wheel sinking deeper subjects the wheels to a shorter rolling radius and, in contrast, one sinking less to a longer rolling radius. Thus, the intrusion of the length-measuring wheel affects its effective rolling radius and thus also the measurement result obtained. Such a variation in the intrusion can be compensated for by the present invention.

Other advantages and details of the invention are disclosed in the following more detailed description.

BRIEF DESCRIPTION OF THE FIGURES

In the following, some preferred embodiments of the invention will be described in more detail with reference to the accompanying draw ing, in which

     Figure 1 is a front view of a harvester head of a forestry machine, and
     Figure 2 schematically shows the operation of the above-described measuring arrangement.

DETAILED DESCRIPTION OF PREFERRED EMBODIMENTS

Some preferred embodiments of the present correction method and the device employed for it are described in the following with ref erence to the above-mentioned figures. In this case, the device comprises structural parts indicated with reference numerals in the figures and corresponding to the reference numerals used in the present description.

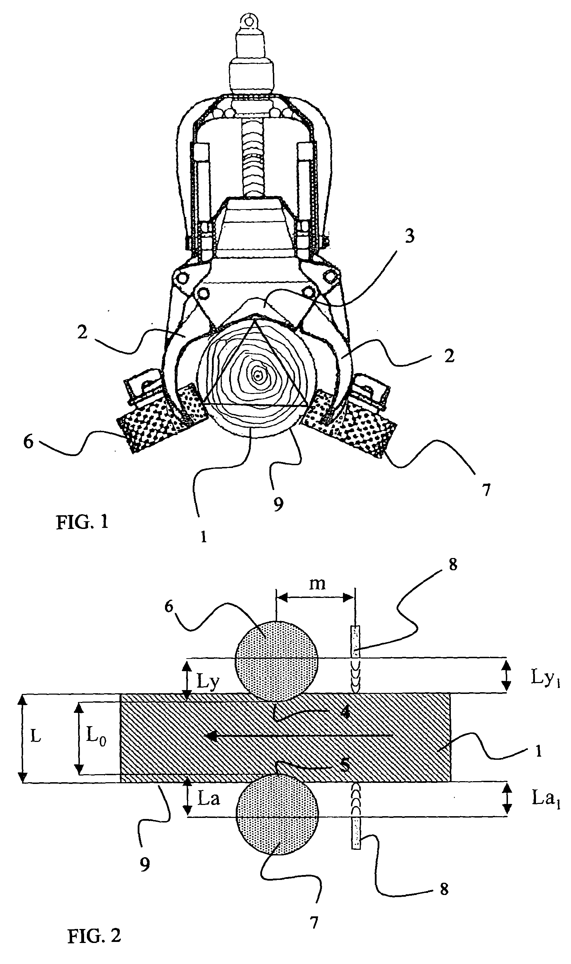

Accordingly, the method for correcting measurement data is particularly advantageously utilizable in a lumbering machine. In such a lumbering machine, a tool for processing a tree 1 is conventionally coupled to a crane, the tool being a harvester head, which is schematically shown in Figure 1. When felling of a tree is initiated, it is gripped with the harvester head, wherein the tree is felled with a crosscut saw arranged at the harvester head, delimbed with delimbing elements 2 and 3 arranged at the harvester head for this purpose, and finally cut off with the crosscut saw into items of a suitable length. When a tree is processed at the harvester head, the diagonal and the linear measure of the tree are simultaneously monitored therein, for which purpose the harvester head is provided with several measuring devices. Data about the measurement results are transferred along a wired or wireless communications link, known per se, to a system for processing data in the lumbering machine.

When a tree 1 to be processed is measured at the harvester head, the tree is guided through one or more measuring points. Figure 2 shows two of these measuring points, 4 and 5. Accordingly, when the length of the tree, as well as the length of the items to be cut off from it, is measured, a length-measuring device arranged to follow the surface of the tree is usually employed at the harvester head, the device not being separately presented in the present context. For measuring the diagonal of the cut-off tree, means following the profile of the tree trunk are utilized, preferably means that convey it at the harvester head. The figures show two of them, i.e. feed rolls 6 and 7. In addition to these, measurement may also take place with the aid of the delimbing means 2 and 3 located at the harvester head.

In a solution of the present first embodiment, the correction of the measurement data is implemented preferably by utilizing three distance sensors 8. Such distance sensors cooperate with the measuring means at the harvester head for determining the diameter of the tree 1 trunk. Consequently, in the embodiment of Figures 1 and 2, the feed rolls 6 and 7 constitute the measuring points 4 and 5 for the tree at the harvester head. For example together with a length-measuring wheel, these are preferably arranged triangularly around the tree trunk processed at the harvester head, in accordance with Figure 1. When the distance sensors are arranged in connection with the measuring means, they settle substantially perpendicularly against the surface 9 of the tree.

In the embodiment according to Figure 2, the distance sensors 8 comprise means arranged in connection with the means 6 and 7 for conveying the tree 1 and substantially immovably arranged relative thereto and operating by non-contacting measurement. Such a distance sensor comprises a means, known per se, such as a means for measuring the distance travelled by ultrasound, light, microwave or an electromagnetic pulse. It may also be composed of a capacitive or inductive measuring sensor. The midpoints of the distance sensor and the tree-conveying means are arranged at distance m from each other, the distance sensor being arranged to register the distance $Ly_1$ between the distance sensor and the surface of the tree. Since the distance sensors are arranged substantially perpendicularly relative to the surface of the tree, the reflections required thereby from the surface of the tree are optimal.

The number of distance sensors 8 does in no way depend on the diameter of the tree 1 to be cut or the number of tree-conveying means 6 and 7. The measuring method enabled by the distance sensors gives an exactly equally accurate measurement result from both small and large trees. Even one distance sensor can be used to estimate the intrusion of one measuring means, for instance a tree-conveying means or a length-measuring wheel, into the tree trunk, and utilize the intrusion data thus obtained for correcting the measurement results. Intrusion data obtained from one distance sensor is applicable to correcting the measurement data assuming that the intrusion of the other measuring means is substantially equal. The intrusion data for the other measuring means can also be assumed to depend on the data obtained from said one distance sensor in some predetermined manner.

An error in measurement generated in connection with the measurement of the diameter of the tree 1 is arranged to be corrected as follows. In accordance with the figures, the measuring means at the harvester head are composed of the tree-conveying means 6 and 7 that follow the profile of the tree trunk. Usually, these means intrude into the tree conveyed between them during its processing, such as is indicated in Figure 2. The distance between the measuring points 4 and 5 constituted by the two tree-conveying means is thus registered as distance $L_0$, which should be applied to the calculation of the diameter of the tree. However, the registered measurement result gives an erroneous value to the diameter being calculated. In the calculation, the magnitude of the error in the starting value is $L - L_0$.

Since the distance sensor 8 and the tree-conveying means 6 and 7 are substantially immovable relative to each other, the distance La and Ly between the distance sensor and the perimeter of the tree-conveying means is constant. On the other hand, since the prevailing distance $Ly_1$ and $La_1$ between the distance sensor and the surface of the tree can be continuously registered, the actual position of the measuring means relative to the surface of the tree is known at all times.

Consequently, the correct measure L of the leg of the triangle, required for calculating the diameter of the tree, can be continuously calculated by formula:

$$L = L_0 + (La - La_1) + (Ly - Ly_1).$$

When the correct distance between the measuring means is known, the diameter data about the tree 1 trunk can be corrected to the correct magnitude by a simple calculation.

The mutual distance m of the tree-conveying means 6 and 7 and the distance sensor 8, indicated in Figure 2, is employed for synchronizing the magnitudes measured from the tree-conveying means and the distance sensors to substantially the same measuring points.

A significant advantage of the present measuring arrangement is that there is no need to calibrate it with actual trees 1; instead, it is sufficient to employ a dimensionally accurate plastic tube series, for example, for the calibration. In this case, the harvester head is guided hydraulically into a floating position, whereby, the machine turned off, the tree-conveying means 6 and 7 can be opened or pressed shut manually. The measuring tube employed for the calibration is arranged at the harvester head, and the tree-conveying means are pressed manually against the measuring tube. This being so, the measuring means automatically registers the diameter of the measuring tube and stores the data about the mutual positions of the tree-conveying means and the distance sensors 8.

The measuring system can always be automatically calibrated when the harvester head is closed. In this case, the frame of the harvester head is preferably provided with contact surfaces (not separately shown) as reference points for the non-contacting distance sensors 8. As the harvester head closes, the distance sensor automatically makes a verifying measurement relative to said reference point. If the distance from the reference point has changed from the default, the measuring values can be corrected by the correction value given by this verifying measurement. On the other hand, on the basis of this verifying measurement, the clearances generated in the tree-conveying means, the delimbing elements or other measuring means will be observed in the measurement carried out.

Such an automatic verification also enables the detection of malfunction in the mechanical measuring means or the distance sensor 8, whereby the malfunction can be notified to the user of the lumbering machine. Data about such verifying measurements can be preferably stored in a data processing system in the lumbering machine for later study. If need be, on the basis of the verifying measurement, a reproduced measuring means-distance sensor combination at the harvester head can be automatically replaced into use, should such an option be available.

As a result of the present correction of measurement, the exploitation of the tree 1 being processed can also be significantly improved. Since the intrusion of the measuring means into the surface 9 of the tree no longer restricts the measuring accuracy of the harvester head, a more accurate discrimination in the measurement of the position of the measuring means can be applied, whereby a significant increase in the total accuracy is achieved in the measurement of the felling result.

Since the distance of the distance sensor 8 from the surface 9 of the tree 1 to be measured is always substantially the same, with a variation of only a few millimetres, the measuring area of the distance sensor can be optimised in a manner resulting in a sufficiently rapid sampling frequency.

When positioned in accordance with the present embodiment triangularly around the tree, the intrusion of the measuring means can be checked simply by using one distance sensor.

According to the present second embodiment, the distance sensor 8 can be utilized also in the measurement of the length of a tree 1. Thus, any intrusion of the length-measuring wheel into the tree to be measured can be compensated for by applying the above-described technique, whereby the measurement result of the length of the tree trunk or items separated from it can be corrected by a correction coefficient proportional to the intrusion. Accordingly, by using one distance sensor, the intrusion of any measuring means, whether it is a length-measuring wheel or a tree-conveying means, into the tree trunk can be estimated and the thus obtained intrusion data can be utilized also for correcting the length measurement results. Such intrusion data obtained from the distance sensor can be applied to correcting a length measurement assuming that the intrusions of all measuring means, including the length-measuring wheel, are substantially the same. In the above-described manner, the intrusion data of other measuring means can also be assumed dependent on said data obtained from the distance sensor in some predetermined manner.

A distance sensor 8 of the above-described type can also be used to identify whether the length-measuring wheel of the harvester head is resting against the surface 9 of the tree being processed. When the distance sensor indicates that the length-measuring wheel has not yet landed on or it has been detached from the surface of the tree being processed, the processing of the tree can be prevented, knowing that a reliable length measurement result cannot necessarily be obtained.

The separation of the length-measuring wheel or another measuring means from the surface 9 of the tree may also be caused by impurities accumulated on its surface. If the distance sensor indicates that the measuring point 4 or 5 is continuously above the surface of the tree, this is an indication that the measuring means is clogged.

Naturally, the measurement data of both the measuring means and the distance-meter are arranged to be recorded in a log in a system for processing the data of the lumbering machine, from which log they can be retrieved when required for further processing. In addition, essential deviations detected by the distance-meter in the measurement data of the measuring means are arranged to generate a notification for alerting the user of the lumbering machine to initiate repair work required by any errors.

It is obvious to a person skilled in the art that as technology advances, the basic idea of the invention can be implemented in a variety of ways. Consequently, the invention and its embodiments are not restricted to the above examples, but can vary within the scope of the claims.

Particularly for persons skilled in the art, many different wireless connections will be evident for transferring the measurement results given by the distance sensors 8 to the system for processing the data of the lumbering machine.

**Claims**

1. A method of correcting measurement data, wherein a tree (1) processed at a harvester head of a lumbering machine is measured with measuring means arranged at the harvester head, whereby the tree trunk is guided at the harvester head through a measuring point generated by the measuring means in the tree, **characterized by**
   generating the measuring point (4, 5) from the measuring means (2, 3, 6, 7) following the profile of the tree (1) trunk and a distance sensor (8) arranged substantially immovable relative thereto,
whereby the distance sensor registers the distance to a surface (9) of the tree by
comparing the measurement data registered by the measuring means (2, 3, 6, 7) and the distance sensor (8), being aware of the actual position of the measuring means relative to the surface (9) of the tree, and being able to computationally correct the measurement data registered by the measuring means (2, 3, 6, 7).

2. A method as claimed in claim 1, **characterized by** guiding the tree (1) trunk at the harvester head through two or more measuring points (4, 5), whereby the measuring means (2, 3, 6, 7) register the distance between each other.

3. A method as claimed in claim 1 or 2, **characterized by** utilizing the means (6, 7) for guiding and/or displacing the tree (1) trunk at the harvester head as the measuring means.

4. A method as claimed in claim 2 or 3, **characterized by** guiding the tree (1) through three measuring points.

5. A method as claimed in claim 1, **characterized by** utilizing a length-measuring wheel for measuring the length of the tree (1) trunk at the harvester head as the measuring means.

6. A method as claimed in any one of the preceding claims, **characterized by** registering the measurement data of both the measuring means (2, 3, 6, 7) and the distance-meter (8) in a log in a system for processing the data of the lumbering machine.

7. A method as claimed in any one of the preceding claims, **characterized by** notifying substantial deviations detected by the distance-meter (8) in the measurement data of the measuring means (2, 3, 6, 7) to a user of the lumbering machine.

8. A device for correcting measurement data and comprising measuring means measuring a tree (1) processed at a harvester head of a lumbering machine for generating a measuring point in the tree, **characterized in that**
in connection with the measuring means (2, 3, 6, 7) following the profile of the tree (1) trunk is arranged a distance sensor (8) substantially immovable relative thereto and performing non-contacting measurement, whereby
the distance sensor (8) is arranged to register the distance to the surface (9) of the tree in such a manner that
when the measurement data obtained from the distance sensor (8) deviates from a predetermined, this allows the position of the measuring means (2, 3, 6, 7) relative to the surface of the tree to be concluded, and
the measurement data registered by the measuring means (2, 3, 6, 7) can be corrected computationally.

9. A device as claimed in claim 8, **characterized in that** the measuring means comprises a means (6, 7) for guiding and/or displacing the tree (1) trunk at the harvester head.

10. A device as claimed in claim 8 or 9, **characterized in that** there are three measuring points.

11. A device as claimed in claim 8, **characterized in that** the means comprises a length-measuring wheel.

**Patentansprüche**

1. Verfahren zum Korrigieren von Messdaten, wobei ein Baum (1), der in einem Holzvollernterkopf einer Holzerntemaschine verarbeitet wird, mit im Holzvollernterkopf angeordneten Messmitteln gemessen wird, wobei der Baumstamm im Holzvollernterkopf durch einen von den Messmitteln im Baum generierten Messpunkt geführt wird, **gekennzeichnet durch** Generieren des Messpunkts (4, 5) aus den Messmitteln (2, 3, 6, 7), die dem Stammprofil des Baums (1) folgen, und einem Abstandsensor (8), der im Wesentlichen hierzu unbeweglich angeordnet ist,
wobei der Abstandsensor den Abstand zu einer Oberfläche (9) des Baums registriert durch Vergleichen der von den Messmitteln (2, 3, 6, 7) und dem Abstandsensor (8) erfassten Messdaten unter Berücksichtigung der tatsächlichen Lage der Messmittel relativ zur Oberfläche (9) des Baums und die Fähigkeit, die von den Messmitteln (2, 3, 6, 7) erfassten Messdaten rechnerisch zu korrigieren.

2. Verfahren nach Anspruch 1, **dadurch gekennzeichnet, dass** der Stamm des Baums (1) durch zwei oder mehr Messpunkte (4, 5) im Holzvollernterkopf geführt wird,
wobei die Messmittel (2, 3, 6, 7) den Abstand zwischen ihnen erfassen.

3. Verfahren nach Anspruch 1 oder 2, **gekennzeichnet durch** Einsetzen der Mittel (6, 7) zum Führen und/oder Bewegen des Stamms des Baums (1) im Holzvollernterkopf als Messmittel.

4. Verfahren nach Anspruch 2 oder 3, **gekennzeichnet durch** das Führen des Baums (1) **durch** drei Messpunkte.

5. Verfahren nach Anspruch 1, **gekennzeichnet**

**durch** Einsetzen eines Längenmessrads zum Messen der Länge des Stamms des Baums (1) im Holzvollernterkopf als Messmittel.

6. Verfahren nach einem der vorhergehenden Ansprüche, **gekennzeichnet durch** das Erfassen der Messdaten von den Messmitteln (2, 3, 6, 7) und dem Abstandmesser (8) in einem Protokoll in einem System zum Verarbeiten der Daten der Holzerntemaschine.

7. Verfahren nach einem der vorhergehenden Ansprüche, **gekennzeichnet durch** Melden wesentlicher vom Abstandmesser (8) erfasster Abweichungen in den Messdaten der Messmittel (2, 3, 6, 7) an den Benutzer der Holzerntemaschine.

8. Vorrichtung zum Korrigieren von Messdaten, umfassend Messmittel, die einen Baum (1) abmessen, der in einem Holzvollernterkopf einer Holzerntemaschine verarbeitet wird, um einen Messpunkt im Baum zu generieren, **dadurch gekennzeichnet, dass** in Verbindung mit den Messmitteln (2, 3, 6, 7), die dem Stammprofil des Baums (1) folgen, ein Abstandsensor (8) im Wesentlichen hierzu unbeweglich angeordnet ist und berührungsfreie Messungen durchführt, wobei der Abstandsensor (8) angeordnet ist, um den Abstand zur Oberfläche (9) des Baums derart zu messen, dass, wenn die vom Abstandsensor (8) erfassten Messdaten von einem vorgegebenen Wert abweichen, ein Festlegen der Position der Messmittel (2, 3, 6, 7) relativ zur Oberfläche des Baums ermöglicht wird und die von den Messmitteln (2, 3, 6, 7) erfassten Messdaten rechnerisch korrigiert werden können.

9. Vorrichtung nach Anspruch 8, **dadurch gekennzeichnet, dass** das Messmittel ein Mittel (6, 7) aufweist, um den Stamm des Baums (1) im Holzvollernterkopf zu führen bzw. zu bewegen.

10. Vorrichtung nach Anspruch 8 oder 9, **dadurch gekennzeichnet, dass** drei Messpunkte vorliegen.

11. Vorrichtung nach Anspruch 8, **dadurch gekennzeichnet, dass** das Mittel ein Längenmessrad aufweist.

## Revendications

1. Procédé de correction de données de mesure, dans lequel un arbre (1) traité au niveau d'une tête d'abattage d'une machine d'exploitation forestière est mesuré par des moyens de mesure agencés au niveau de la tête d'abattage, dans lequel le tronc d'arbre est guidé au niveau de la tête d'abattage par l'intermédiaire d'un point de mesure généré par les moyens de mesure dans l'arbre, **caractérisé par** :

   la génération du point de mesure (4, 5) à partir des moyens de mesure (2, 3, 6, 7) suivant le profil du tronc de l'arbre (1) et d'un capteur de distance (8) agencé sensiblement fixement par rapport à ceux-ci,
   dans lequel le capteur de distance enregistre la distance jusqu'à une surface (9) de l'arbre :

      en comparant les données de mesure enregistrées par les moyens de mesure (2, 3, 6, 7) et le capteur de distance (8) en ayant connaissance de la position réelle des moyens de mesure par rapport à la surface (9) de l'arbre, et
      en étant capable de corriger par calcul les données de mesure enregistrées par les moyens de mesure (2, 3, 6, 7).

2. Procédé selon la revendication 1, **caractérisé par** :

   le guidage du tronc de l'arbre (1) au niveau de la tête d'abattage par l'intermédiaire de deux ou plus de deux points de mesure (4, 5),
   les moyens de mesure (2, 3, 6, 7) enregistrant la distance entre eux.

3. Procédé selon la revendication 1 ou 2, **caractérisé par** l'utilisation des moyens (6, 7) pour guider et/ou déplacer le tronc de l'arbre (1) au niveau de la tête d'abattage en tant que moyens de mesure.

4. Procédé selon la revendication 2 ou 3, **caractérisé par** le guidage de l'arbre (1) par l'intermédiaire de trois points de mesure.

5. Procédé selon la revendication 1, **caractérisé par** l'utilisation d'une roue de mesure de longueur pour mesurer la longueur du tronc de l'arbre (1) au niveau de la tête d'abattage en tant que moyens de mesure.

6. Procédé selon l'une quelconque des revendications précédentes, **caractérisé par** l'enregistrement des données de mesure à la fois des moyens de mesure (2, 3, 6, 7) et de l'appareil de mesure de distance (8) dans un journal dans un système pour traiter les données de la machine d'exploitation forestière.

7. Procédé selon l'une quelconque des revendications précédentes, **caractérisé par** la notification des écarts significatifs détectés par l'appareil de mesure de distance (8) dans les données de mesure des moyens de mesure (2, 3, 6, 7) à un utilisateur de la machine d'exploitation forestière.

**8.** Dispositif pour corriger des données de mesure et comprenant des moyens de mesure mesurant un arbre (1) traité au niveau d'une tête d'abattage d'une machine d'exploitation forestière pour générer un point de mesure dans l'arbre, **caractérisé en ce que** :

en relation avec les moyens de mesure (2, 3, 6, 7) suivant le profil du tronc de l'arbre (1), un capteur de distance (8) est agencé sensiblement fixement par rapport à ceux-ci et effectue une mesure sans contact,
le capteur de distance (8) étant agencé pour enregistrer la distance jusqu'à la surface (9) de l'arbre d'une manière telle que :

lorsque les données de mesure obtenues à partir du capteur de distance (8) s'écartent de données pré-déterminées, cela permet de déduire la position des moyens de mesure (2, 3, 6, 7) par rapport à la surface de l'arbre, et
les données de mesure enregistrées par les moyens de mesure (2, 3, 6, 7) peuvent être corrigées par calcul.

**9.** Dispositif selon la revendication 8, **caractérisé en ce que** les moyens de mesure comprennent des moyens (6, 7) pour guider et/ou déplacer le tronc de l'arbre (1) au niveau de la tête d'abattage.

**10.** Dispositif selon la revendication 8 ou 9, **caractérisé en ce qu'**il y a trois points de mesure.

**11.** Dispositif selon la revendication 8, **caractérisé en ce que** les moyens comprennent une roue de mesure de longueur.

FIG. 1

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FI 87155
- FI 106092
- US 4982772 A
- FI 88074